# EUROPEAN PATENT APPLICATION

(11) **EP 2 811 655 A1**
(43) Date of publication of application: **10.12.2014**
(21) Application number: 12867140.1
(22) Date of filing: 08.05.2012
(51) Int. Cl.: H04B 1/38, H04M 1/02

(54) **HINGE APPARATUS FOR MOBILE TERMINAL**

(30) Priority: 03.02.2012 KR 20120011114
(71) Applicant: Kwon, Seong Tae, Seoul 151-755 (KR)
(72) Inventor: Kwon, Seong Tae, Seoul 151-755 (KR)
(74) Representative: Jeannet, Olivier
(86) International application number: PCT/KR2012/003593
(87) International publication number: WO 2013/115435

(57) **Abstract**

The present invention relates to a hinge apparatus for a mobile terminal, and more particularly, to a hinge apparatus for a mobile terminal, which prevents a hinge from overlapping when a housing is folded to optimize the application of space in a display region and a keypad region and realize a miniaturized and slim device.

## Description

### Technical Field

The present invention relates, in general, to a hinge apparatus for a mobile terminal and, more particularly, to a hinge apparatus for a mobile terminal, which prevents a hinge from overlapping when a housing is folded, thus maximizing the display region of a body and a folder, in addition to realizing the miniaturization and slimness of a device.

### Background Art

With the rapid growth IT technology and the explosion of digital information accessible via the Internet and the like, a mobile terminal such as a cell phone requires high performance and convenient portability. To this end, the miniaturization and slimness of a device are being actively pursued.

For example, the mobile terminal starting from a bar type sequentially developed into a flip type, a folder type and a slide type. Currently, the general form-factor trend of mobile terminals is a bar type smartphone equipped with a large display.

In this context, the above-described folder type mobile terminal refers to a mobile terminal which is configured such that a display housing is unfolded or folded with respect to a side of a main housing. A hinge structure of the folder type mobile terminal will be described below in brief.

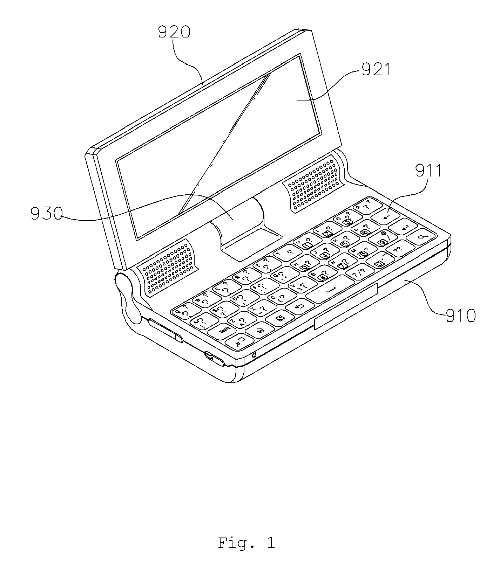

FIG. 1 is a perspective view showing a conventional hinge structure of a mobile terminal. As shown in FIG. 1, the conventional hinge structure of the mobile terminal is composed of a combination of a main housing 910 and a hinge apparatus 930. Various hardware components required to operate a device are accommodated in the main housing 910, with a keypad 911 mounted on a surface of the main housing to input text. The hinge apparatus 930 is assembled with the main housing 910 and a display housing 920, and is used to fold the display housing 920.

According to the related art, the display housing 920 rotates about the hinge apparatus 930 to be unfolded and thereby exposes a display module 921 and the keypad 911 to the outside. In such a state, text is input using the keypad 911 to allow a user to conveniently monitor and use several functions of the terminal, such as making or receiving a phone call, sending a text message, or accessing the internet.

However, in order to achieve the above-described folder type structure, the above hinge apparatus 930 should be essentially provided. Thus, each of the main housing 910 and the display housing 920 requires an additional space to be assembled with the hinge apparatus 930.

For this reason, portions of the main housing 910 and the display housing 920 inevitably overlap each other, so that a region for placing the keypad 911 and the display module 921 may undesirably become narrow.

Moreover, the assembled hinge apparatus 930 causes portion of the main housing 910 to protrude out, so that a valley portion around the hinge apparatus is exposed, thereby marring the appearance of the device. As a result, this imposes restrictions on the miniaturization and slimness of the mobile terminal.

### Technical Problem

Accordingly, the present invention has been made keeping in mind the above problems occurring in the related art, and is intended to provide a hinge apparatus for a mobile terminal, which includes a slider that may move along a predetermined orbit from an interior of a main housing when a display housing is folded, thus preventing portions of the display housing and the main housing from overlapping each other and thereby realizing an unfolded state along an extrapolated line.

Further, the present invention provides a hinge apparatus for a mobile terminal, which further includes a tension band having a predetermined tension, thus allowing a slider to be smoothly received in a main housing when a display housing is folded.

### Technical Solution

In an aspect, the present invention provides a hinge apparatus for a mobile terminal configured to fold a display housing from a side of a main housing, the hinge apparatus including:
a slider accommodated in the side of the main housing to repeatedly perform a movement along a curved orbit in conjunction with folding of the display housing; a barrel integrally attached to the display housing and hinged to an end of the slider to enable rotation of the display housing; a cycle attachment provided in the main housing to assist the movement of the slider and rotation of the barrel induced by the movement of the slider; and a bonding assembly assembled with the slider, the barrel and the cycle attachment, and serving to guide the movement of the slider, wherein the barrel includes a rotating shaft protruding from an end in a longitudinal direction of the barrel to rotate the display housing, and a free-stop hinge provided on an opposite end of the barrel to prevent an idle movement of the barrel immediately after the display housing is folded or unfolded, and a pulley having a band ring is provided on the rotating shaft of the barrel, and a tension band is wound on the pulley of the rotating shaft of the barrel to provide tension for drawing the slider into the main housing while the display housing is folded.

The hinge apparatus may further include a torsion spring provided between a base plate and a rear portion of the slider, the torsion spring biasing the slider in an ejecting direction when the slider is in a fully ejected position and biasing the slider in a receiving direction when the slider is in a fully received position, the torsion spring being set in a neutral position where the torsion spring does not apply a force in any direction while the slider is moving.

The cycle attachment may include guide pins hinged to the bonding assembly and protruding from both sides of the rear portion of the slider to control an orbit of the rear portion of the slider; guideway grooves attached to left and right sides of the base plate, and each having a curved trajectory groove to guide the corresponding guide pin; and a plurality of swing arms hinged to the bonding assembly to control the movement of the slider and an orbit of a front portion of the slider.

The hinge apparatus may further include a stabilizer hinged at a central portion thereof to the base plate of the bonding assembly and performing a radial rotation with respect to the hinged central portion, both ends of the stabilizer being bent twice at a right angle; and links provided on the both ends of the stabilizer shaft, and having two articulations to be hinged to the guide pins of the rear portion of the slider, thus allowing left and right moving distances of the slider to be kept equal during the movement of the slider.

The free-stop hinge may include the tension band wound between the spring and an S cam and A cam combination, and the pulley equipped with the ring for holding the tension band, thus preventing an idle movement of the display housing when being folded or unfolded.

The bonding assembly may include a base plate secured to an inner wall of an upper portion of the main housing; a bracket plate attached to a central portion of a lower surface of the base plate in such a way as to be in close contact therewith, thus causing the stabilizer and the torsion spring to be hinged; and a plurality of guideway brackets fastened to both edges of the lower surface of the base plate, thus allowing the slider to be placed under the base plate and guiding the movement of the slider in conjunction with the folding of the display housing.

The torsion spring may include a spring shaft coupled to prevent a coil portion from being deformed when a repulsive force is generated by a torsion moment; an upper joint provided between a rotating shaft of the spring on the base plate and the spring shaft, the upper joint having on both ends thereof rotating-shaft holes; and a lower joint provided between the spring shaft and a spring axle, the lower joint having on both ends thereof rotating-shaft holes.

The base plate may include a follow projection projecting downwards from a lower surface of an end of a front portion thereof to define a rotating angle of the display housing; and an arm bearing provided on an upper portion of a front portion of each of the guideway brackets attached to both ends of the base plate to render an end of the swing arm to be hinged.

The bracket plate may include an arc-shaped bent end longitudinally formed on an end of a rear portion thereof to receive and hinge the stabilizer; and a space defined between an end of the arc-shaped bent end and a spring hook protruding downwards from the base plate to render the torsion spring to be hinged.

### Advantageous Effects

As is apparent from the above description, the hinge apparatus for the mobile terminal according to the present invention is advantageous in that the ends of the rotary portions of the display housing and the main housing come into close contact with each other by the orbital motion of the slider during the folding operation, so that the display region of the folder as well as the display region attached to the main housing is maximized, thus leading to the maximized convenience of use.

Further, the hinge apparatus for the mobile terminal is advantageous in that the above-described folding structure is achieved, so that it is unnecessary to separately form a protrusion and a space which are required to mount the hinge apparatus to the overlapping rotary ends of the main housing and the display housing, thus realizing the miniaturization and the slimness of the device due to the omitted protrusion and space.

Furthermore, the hinge apparatus for the mobile terminal is intended to solve the incomplete folding of the display housing through a tension band which pulls the slider with a predetermined tension so that the slider is smoothly retreated when the display housing is folded, thus allowing the folding operation of the mobile terminal to be more conveniently and more easily performed and thereby enhancing usability and achieving technical advance, therefore achieving a high investment value in the same field. As a result, this invention is very useful.

### Description of Drawings

FIG. 1 is a perspective view showing a conventional hinge structure for a mobile terminal;
FIG. 2 is an exploded perspective view showing the coupling of a hinge apparatus for a mobile terminal according to the present invention;
FIG. 3 is an enlarged sectional view showing an internal structure of the hinge apparatus for the mobile terminal according to the present invention;
FIG. 4 is an exploded perspective view showing an assembly structure of a slider in the hinge apparatus for the mobile terminal according to the present invention;
FIGS. 5A to 5D are enlarged sectional views showing an operation of the hinge apparatus for the mobile terminal according to the present invention, when it is unfolded;
FIGS. 6A to 6C are enlarged sectional views showing an operation of a tension band when the hinge apparatus for the mobile terminal according to the present invention is folded;
FIG. 7 is a perspective view showing the structure of a free-stop hinge in the hinge apparatus for the mobile terminal according to the present invention; and
FIG. 8 is a perspective view showing a state in which a display housing is unfolded by the hinge apparatus for the mobile terminal according to the present invention.

### Mode for Invention

Hereinbelow, preferred embodiments of the present invention will be described in detail with reference to the accompanying drawings such that the present invention will be easily carried out by those skilled in the art.

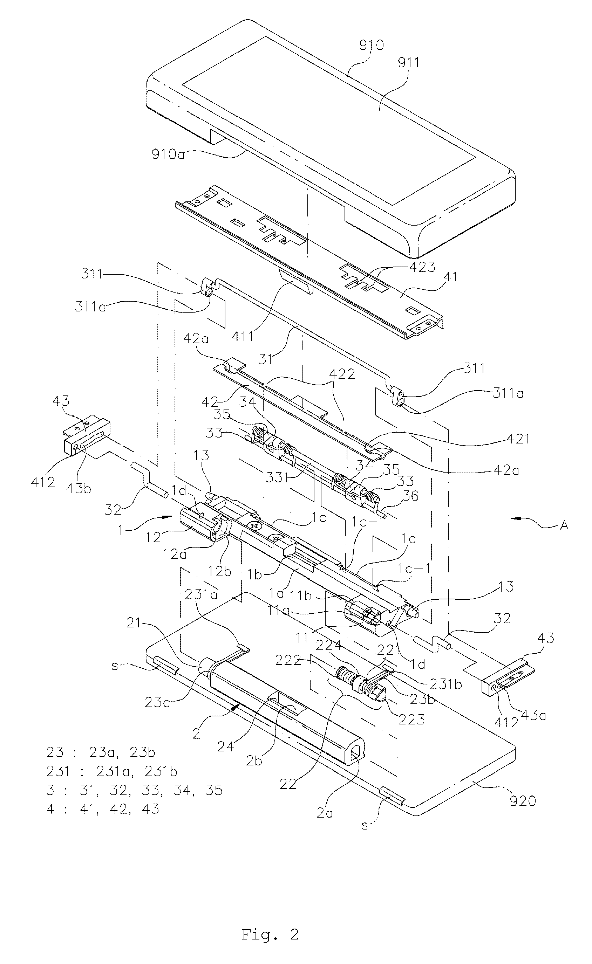

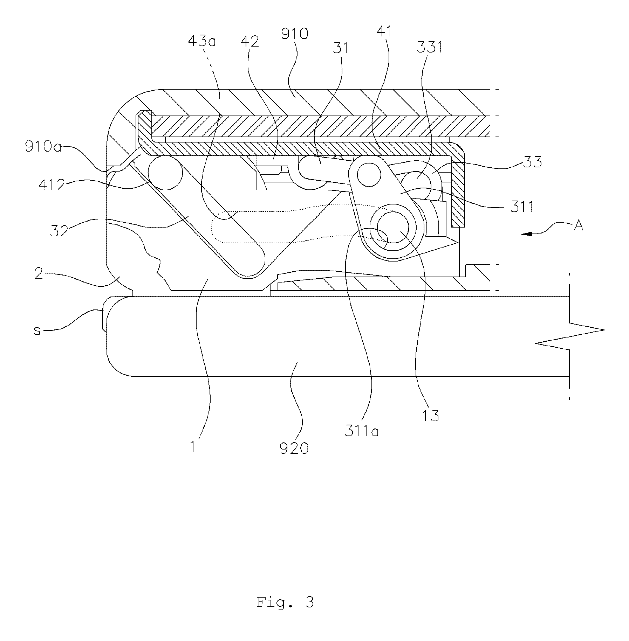

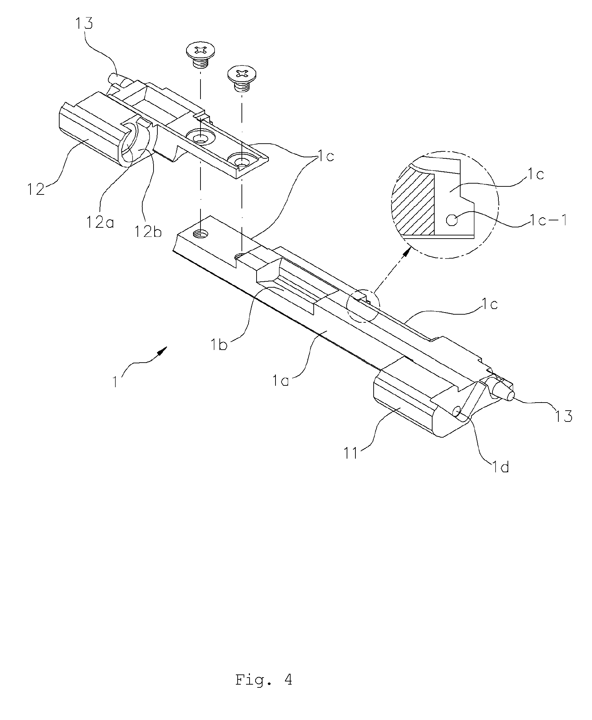

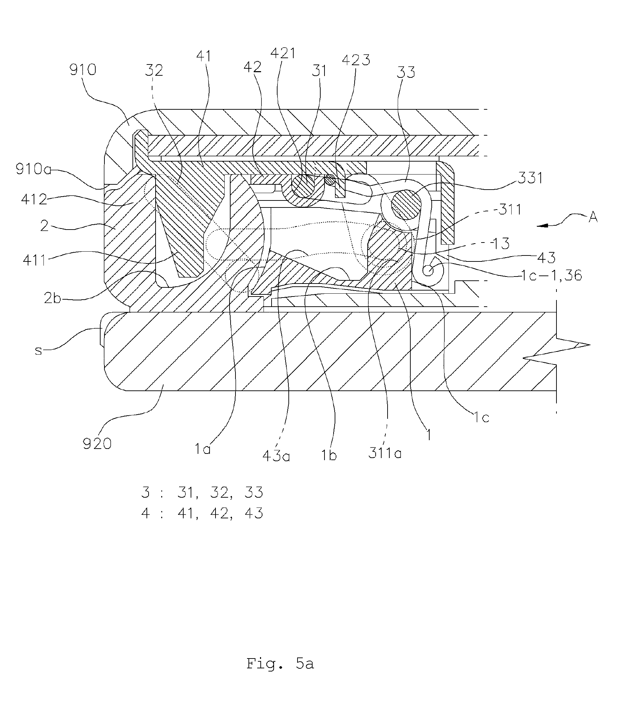

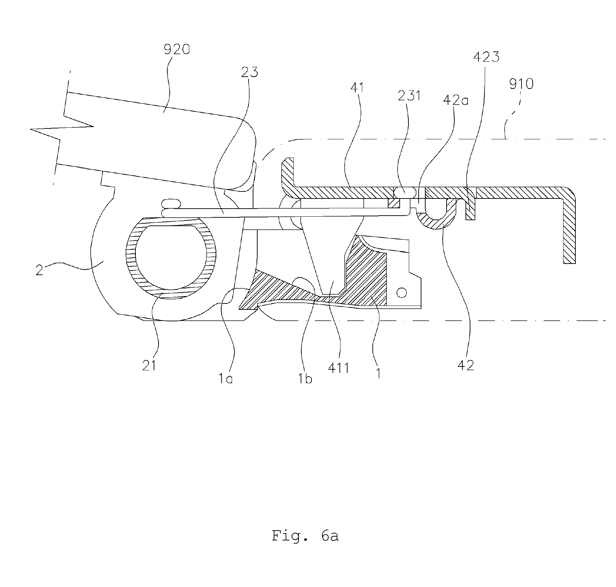

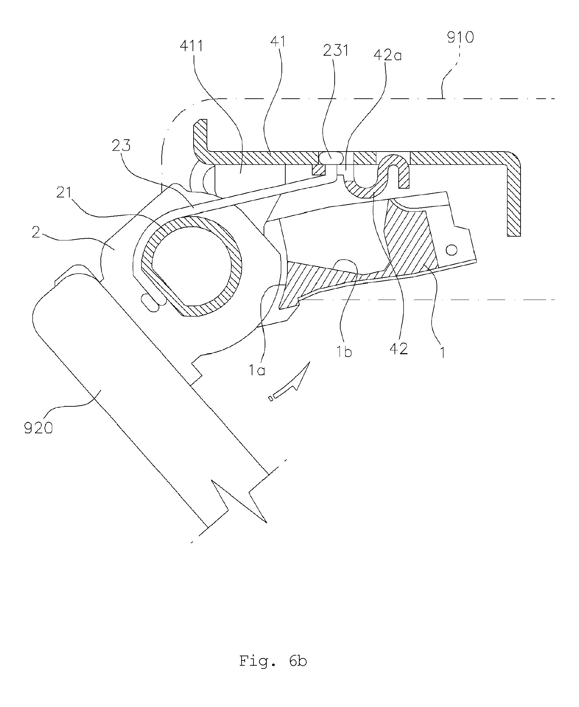

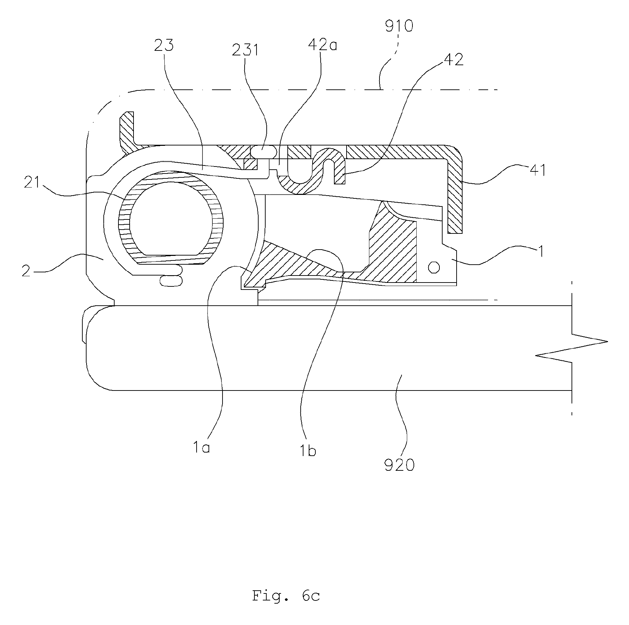

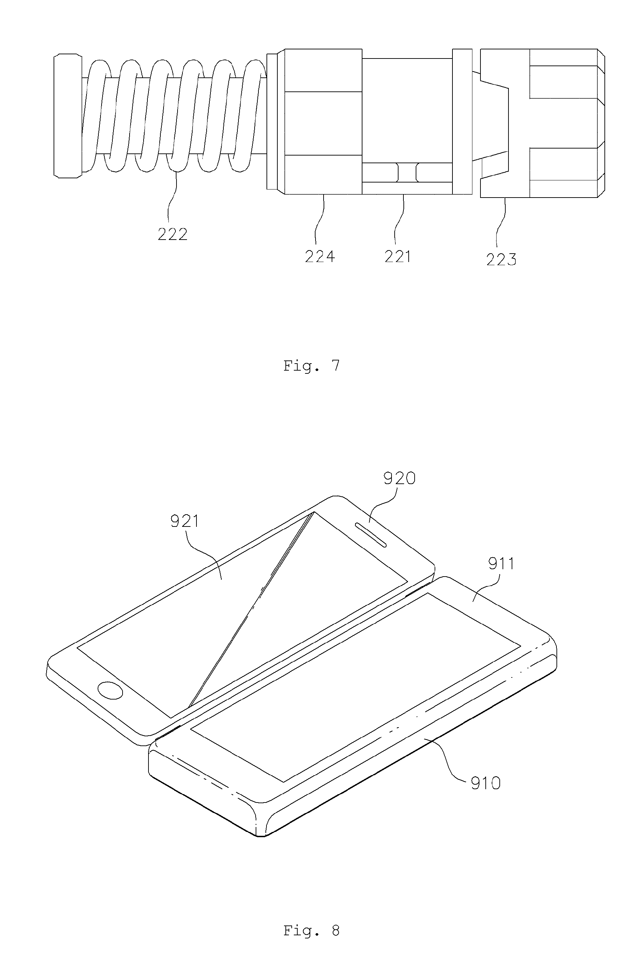

FIG. 2 is an exploded perspective view showing the coupling of a hinge apparatus for a mobile terminal according to the present invention. FIG. 3 is an enlarged sectional view showing an internal structure of the hinge apparatus for the mobile terminal according to the present invention. FIG. 4 is an exploded perspective view showing an assembly structure of a slider in the hinge apparatus for the mobile terminal according to the present invention. FIGS. 5A to 5D are enlarged sectional views showing an operation of the hinge apparatus for the mobile terminal according to the present invention, when it is unfolded. FIGS. 6A to 6C are enlarged sectional views showing an operation of a tension band when the hinge apparatus for the mobile terminal according to the present invention is folded. FIG. 7 is a perspective view showing the structure of a free-stop hinge in the hinge apparatus for the mobile terminal according to the present invention. FIG. 8 is a perspective view showing a state in which a display housing is unfolded by the hinge apparatus for the mobile terminal according to the present invention.

As shown in FIGS. 2 and 3, the hinge apparatus A for the mobile terminal according to the present invention includes a slider 1, a barrel 2, a cycle attachment 3, and a bonding assembly 4. The slider 1 is accommodated in a side of a main housing 910 of the mobile terminal to repeatedly perform a movement along a curved orbit in conjunction with the folding of a display housing 920. The barrel 2 is integrally attached to the display housing 920 and is hinged to an end of the slider 1 to enable the folding of the display housing 920. The cycle attachment 3 is further provided in the main housing 910 to assist the movement of the slider 1 and the rotation of the barrel 2 induced by the movement thereof. The bonding assembly 4 is assembled with the slider 1, the barrel 2 and the cycle attachment 3 to guide the movement of the slider 1.

Preferably, an opening groove 910a is formed by cutting a central portion of an edge of the main housing 910 to receive the barrel 2 and to prevent the movement of the slider 1 and the rotation of the display housing 920 from interfering with each other.

The slider 1 repeats the movement along the curved orbit from the interior of the main housing 910 to the exterior of the device in such a way as to fold the display housing 920 in a reciprocating manner. A barrel receiving groove 1a is inwardly formed on a central portion of an edge of a front portion of the slider 1 to receive the barrel 2. As the barrel receiving groove 1a is formed, first and second holding ends 11 and 12 protrude from opposite sides of the barrel receiving groove 1a to come into close contact with both ends of the barrel 2.

In order to assemble the slider with the cycle attachment 3 and the bonding assembly 4, guide pins 13 protrude from both ends of a rear portion of the slider to be inserted into guideway brackets 43 of the bonding assembly 4, which will be described later herein.

Further, a first recess hole 1b is formed in a central portion of an upper end of the front portion of the slider 1 to receive a follow projection 411 which projects downwards from a lower surface of a base plate 41 of the bonding assembly 4, which will be described later herein, when the display housing 920 is unfolded.

In addition, a plurality of spring-axle locating grooves 1c is formed on an edge of the rear portion of the slider 1 at predetermined intervals so that torsion springs of the cycle attachment 3 are received and located therein. Both a lower joint 35 of the spring and a spring axle 36 pass through the spring-axle locating grooves 1c.

Moreover, arm holes 1d are inwardly formed in both ends of the slider 1 such that an end of a swing arm 32 of the cycle attachment 3 which will be described later is inserted into each of the arm holes.

Further, a first hinge groove 11a and a shaft hole 12a are inwardly formed in inner walls of the first and second holding ends 11 and 12 such that a free-stop hinge 22 and a rotating shaft 21 of the barrel 2 which will be described later are inserted therein.

Further, band receiving portions 11b and 12b for receiving and protecting the tension band 23 of the barrel 2 which will be described later are formed in front ends of openings of the left and right shaft holes 11a and 12a. Each receiving portion is partially cut off to expose the tension band 23 to the outside.

As shown in FIG. 4, the slider 1 is configured such that the second holding end 12 is detachably assembled therewith, thus allowing the barrel 2 received in the barrel receiving groove 1a to be more easily assembled therewith.

The barrel 2 includes the rotating shaft 21 that rotates the display housing 920 folded from a side of the main housing 910, serves as a hinge point of the display housing 920, and protrudes from an end in a longitudinal direction of the barrel, and the free-stop hinge 22 that is provided on an opposite end to prevent the idle movement of the barrel 2 immediately after the display housing 920 is folded or unfolded.

Further, the tension band 23 is wound on an outer surface of the rotating shaft 21, and provides tension to allow the slider 1 to be smoothly received in the main housing 920 while the display housing 920 is folded.

Moreover, a second hinge groove 2a is inwardly formed in an end on which the free-stop hinge 22 is provided, thus enabling the insertion of the free-stop hinge 22. A hinge spring 222 of the free-stop hinge 22 and a rotation preventing stopper 224 of an A cam are received in the second hinge groove. A pulley 221 is mounted between the rotation preventing stopper 224 of the A cam of the free-stop hinge 22 and an A cam and S cam combination 223 such that the tension band 23 is wound thereon.

A second recess hole 2b is downwardly formed in the central portion of the upper end of the barrel 2 to receive the follow projection 411 that protrudes downwards from the lower surface of the base plate 41 of the bonding assembly 4, which will be described below, when the display housing 920 is folded.

Preferably, one end of the tension band 23 wound around the pulley is provided with a ring for securing the band, while the other end is provided with a hanger 231 that is bound to the bonding assembly 4 to generate the tension on the band 23.

The cycle attachment 3 renders the arc-shaped movement of the slider 1 and the rotation of the barrel 2 to be performed naturally. The cycle attachment includes a guideway bracket 43, a stabilizer 31, left and right swing arms 32, a plurality of torsion springs 33, and upper and lower joints 34 and 35. The guide pin 13 protruding from a rear of the slider is fitted into the guideway bracket, so that it controls the rear orbit of the slider 1. A central portion of the stabilizer is hinged to the bonding assembly 4 and both ends thereof which are rotatable around the hinged central portion in a radial direction are assembled with the guide pin 13 via links 311, thus allowing the left and right moving distances of the slider 1 to be kept equal when the slider 1 performs the movement. Each swing arm 32 rotates in a radial direction while being hinged at one end thereof to the bonding assembly 4 and inserted at the other end into the arm hole 1d of the slider 1, thus controlling a front orbit when the slider 1 performs the movement. An upper end of each torsion spring is positioned between the bracket plate 42 and the spring hook 423, a central portion thereof is fitted over the spring shaft 331, and both ends are coupled to the spring axles 36, thus achieving the semi-automatic movement of the slider 1 when the display housing 920 is folded, and having an elastic repulsive force to secure the slider at a fully ejected position and a fully retraced position. The upper and lower joints 34 and 35 serve to maintain a uniform distance among three action points (a rotating shaft of a base plate side, a center of a spring coil, and a center of a spring axle) of the spring.

The stabilizer 31 is bent to form steps at both ends thereof, so that the both ends are rotatable about a central portion thereof in the radial direction. Preferably, the links 311 are provided on the both ends of the stabilizer, with a pin hole 311a formed through each link to insert the guide pin 13 of the slider 1 therein.

The torsion spring 33 generates a repulsive force by torsion moment, thus realizing the semi-automatic movement of the slider 1. Preferably, in order to prevent a coil portion from being deformed by the generated torsion moment, the spring shaft 331 and the spring axles 36 are further provided to continuously pass through the plurality of torsion springs 33, the upper joint 34, and the lower joint 35.

The bonding assembly 4 is assembled with the slider 1 and the cycle attachment 3 to guide the movement of the slider 1. The bonding assembly includes a base plate 41, a bracket plate 42, and left and right guideway brackets 43. The base plate is secured to an inner wall of an upper portion of the main housing 910. The bracket plate is further assembled with a central portion of a lower surface of the base plate 41 in such a way as to be in close contact therewith, thus causing the stabilizer 31 and the torsion spring 33 to be hinged to each other. The guideway brackets are fastened to both edges of the lower surface of the base plate 41, thus placing the slider 1 under the base plate 41 and guiding the movement of the slider 1 as the display housing 920 is folded.

The follow projection 411 and a spring hook 423 are provided on the base plate 41. The follow projection projects downwards from a lower surface of an end of a front portion of the base plate to create a rotating angle of the display housing 920. The spring hook is bent downwards, so that an upper rotating shaft of the spring is positioned therein.

A band support hole 42a is formed through an edge of the bracket plate 42 to support and bind the hander 231 of the tension band 23. An arc-shaped bent end 421 is longitudinally formed in an end of a rear portion of the bracket plate to seat and hinge a central portion of the stabilizer 31 of the cycle attachment 3. A joint recess 422 is formed in the arc-shaped bent end 421 to be at a position corresponding to the upper joint 34, thus allowing a rotating shaft of the spring 33 on a base-plate side to be freely rotated.

Guideway grooves 43a and 43b are longitudinally formed through the guideway bracket 43 to have a curved orbit along which the inserted guide pin 13 slides forwards and backwards, thus guiding the movement of the slider 1 in conjunction with the folding of the display housing 920. Further, an arm bearing 412 is formed in an upper portion of a front of the guideway bracket to support a rotating shaft of the swing arm 32 on a base side.

Reference letter "s" denotes at least one stopper for absorbing shocks when an end of a rotary portion of the display housing comes into close contact with an end of a rotary portion of the main housing.

An operation of the hinge apparatus A for the mobile terminal according to the present invention configured as described above will be described below in detail.

First, as shown in FIG. 3, the barrel 2 integrally attached to a surface of the display housing 920 is received in the barrel receiving groove 1a of the slider 1, and simultaneously assumes a state wherein it is rotatable about the first and second holding ends 11 and 12 using the rotating shaft 21 and the free-stop hinge 22.

Here, the tension band 23 wound on the rotating shaft 21 is received in the band receiving portion 12b and is simultaneously drawn out at an end equipped with the hanger 231, so that the end is bound to the band support hole 42a of the bracket plate 42. The tension band 23 wound on the free-stop hinge is received in the band receiving portion 11a, and the hanger 231 is likewise bound to the band support hole 42a of the bracket plate 42.

Thus, the display housing 920 is coupled to a side of the main housing 910 in such a way as to be foldable. The free-stop hinge 22 prevents an undesirable movement when the display housing 920 is finally folded or unfolded by the rotation of the barrel 2.

Further, when the display housing 920 is folded, the tension of the tension band 23 allows the slider 1 to be smoothly moved backwards and received in the main housing 910. This is realized by the tension of the tension band 23.

Subsequently, the slider 1 is received in the main housing 910 by the bonding assembly 4, and is reciprocated along the curved orbit in conjunction with the driving of the cycle attachment 3, thus being repeatedly moved out from or retracted into the main housing 910.

To this end, the base plate 41 of the bonding assembly 4 is assembled with the main housing 910 in such a way as to be in close contact with the upper portion of the inner wall thereof, and the bracket plate 42 is further attached to the central portion of the lower surface of the base plate 41, thus allowing the stabilizer 31 of the cycle attachment 3, the left and right swing arms 32 and the torsion spring 33 to be hinged to the bonding assembly 4.

Thereafter, the guideway brackets 43 are coupled to lower surfaces of both sides of the base plate 41. Preferably, the base plate 41 and the guideway bracket 43 are assembled with each other via additional screw bolts (not shown).

Through such a process, the bonding assembly 4 is fixed and it is possible to provide a mobile terminal which is configured such that its display housing 920 is foldable by the movement of the slider 1 along the curved orbit and the rotation of the barrel 2.

As described above, the operation of unfolding the display housing 920 using the hinge apparatus A of the present invention will be described.

First, as shown in FIG. 5A, as the follow projection 411 is received in the second recess hole 2b and the barrel cam 24 is not moved by the free-stop hinge 22, the display housing 920 maintains a close contact state with a side of the main housing 920.

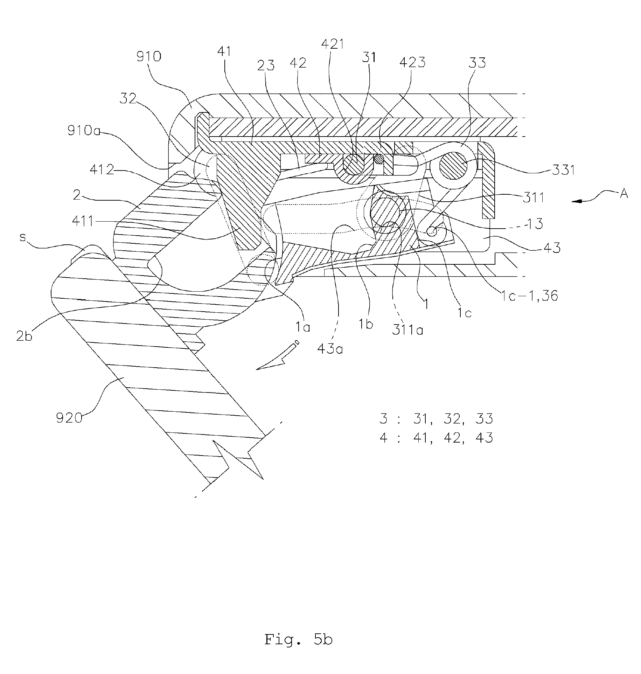

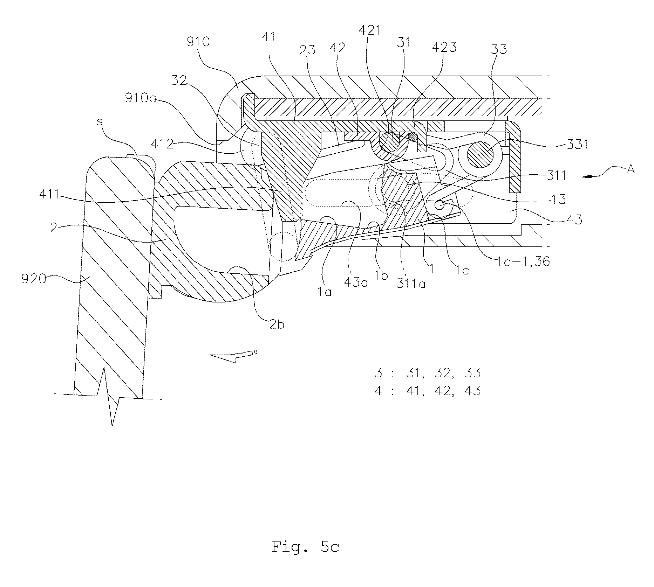

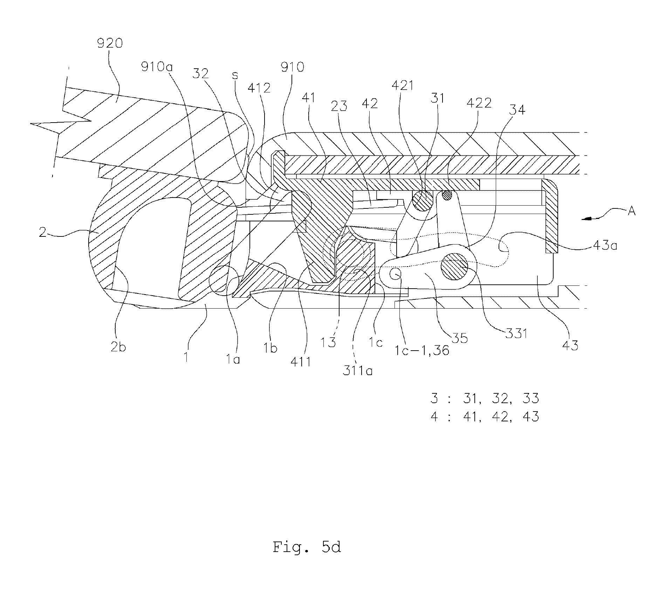

In this state, if the display housing 920 is rotated, as shown in FIGS. 5B, 5C and 5D, the display housing 920 is unfolded, so that the unfolded state is obtained. Thus, this may be achieved by the rotation of the barrel cam 24 and the movement of the slider 1 along the curved orbit.

In this case, the movement of the slider 1 is uniformly assisted by the cycle attachment 3 and the bonding assembly 4.

That is, if the slider 1 is moved out by the folding of the display housing 920, the rear portion of the slider 1 moves along the guideway grooves 43a and 43b of the guideway brackets 43 of the cycle attachment 3, while the front portion thereof moves along an arc path as the swing arms 32 rotate in a radial direction. The display housing 920 is rotated by the barrel cam 24.

While the slider 1 is moved out, the barrel cam 24 moves the slider 1 beyond a neutral position of the torsion spring 33 and thereafter moves the display housing 920 to a final unfolded position by the combination of the repulsive force of the torsion spring 33 mounted between the rear of the slider 1 and the bracket plate 42 and the force of the free-stop hinge 22.

Meanwhile, when the display housing 920 is fully folded, the follow projection 411 received in the second recess hole 2b pushes the barrel cam 24, thus generating a force for ejecting the slider 1 out. As soon as the guide pins 13 come into close contact with the ends of the guideway grooves 43a and 43b, the operation of unfolding the display housing 920 is completed.

As such, as the display housing 920 is unfolded by the slider 1, an end of the rotary portion of the display housing 920 is in contact with an end of a side of the main housing 910, thus forming an extending surface. Therefore, a display portion of a folder and a display provided on a back of a main body do not overlap each other but are placed in the same direction, thus maximizing the convenience of use.

On the other hand, the operation of folding the display housing 920 may be performed in the reverse order of the operation of unfolding the display housing 920. Particularly, the slider 1 can be smoothly received in the main housing 910, so that the incomplete folding of the display housing 920 is relieved by the tension band 23.

In other words, if the folder 920 rotates in the folding direction (closed direction, counterclockwise direction of the drawing), the barrel rotates counterclockwise and the tension band wound on the rotating shaft of the barrel is taken up. Since the other end of the tension band is attached to the interior of the base plate, tension pulling the slider 1 into the main housing 910 is generated and thus the slider 1 is continuously drawn in. In this case, the torque of the free-stop hinge also plays role in moving the slider inwards.

Therefore, the hinge apparatus A according to the present invention allows the display housing 920 to perform an excellent folding operation. Further, as shown in FIG. 8, the end of the rotary portion of the display housing 920 does not overlap the end of a side of the main housing 910, so that the display portion of the folder and the main body are placed on the roughly same plane, thus maximizing the area for the display portion, realizing the miniaturization and slimness of the device, and providing an unique design to the mobile terminal because of a differentiated hinge structure

In addition, it is possible to replace the display of the main body with a general keypad according to the specification of a product.

Although the embodiments of the present invention have been disclosed for illustrative purposes, those skilled in the art will appreciate that various modifications, additions and substitutions are possible, without departing from the scope and spirit of the invention as disclosed in the accompanying claims.

**<Description of reference numerals of important parts>**

| | |
|---|---|
| A: hinge apparatus | 1: slider |
| 1a: barrel receiving groove | 1b: first recess hole |
| 1c: spring locating groove | 1c-1: spring hole |
| 1d: arm hole 11: first holding end | |
| 11a: first hinge groove | 12: second holding end |
| 12a: shaft hole | |
| 12b: band receiving portion | 13: guide pin |
| 2: barrel | 2a: second hinge groove |
| 2b: second recess hole | 3: cycle attachment |
| 4: bonding assembly | 21: rotating shaft |
| 22: free-stop hinge | 221: hinge shaft pulley |
| 222: hinge spring | |
| 223: hinge S cam/A cam combination | |
| 224: hinge A cam stopper | 23: tension band |
| 231: hanger | 24: barrel cam |
| 31: stabilizer | 311: link |
| 311a: pin hole | 32: swing arm |
| 33: torsion spring | 331: spring shaft |
| 34: upper joint | 35: lower joint |
| 36: spring axle | 41: base plate |
| 411: follow projection | 412: arm bearing |
| 42: bracket plate | 42a: band support hole |
| 43: guideway bracket | 43a, 43b: guideway groove |
| 421: arc-shaped bent end | 422: joint recess |
| 423: spring hook | 910: main body |
| 911: main-body display | 920: folder |

## Claims

1. A hinge apparatus for a mobile terminal configured to fold a display housing from a side of a main housing, the hinge apparatus comprising:
a slider accommodated in the side of the main housing to repeatedly perform a movement along a curved orbit in conjunction with folding of the display housing;
a barrel integrally attached to the display housing and hinged to an end of the slider to enable rotation of the display housing;
a cycle attachment provided in the main housing to assist the movement of the slider and rotation of the barrel induced by the movement of the slider; and
a bonding assembly assembled with the slider, the barrel and the cycle attachment, and serving to guide the movement of the slider,
wherein the barrel comprises:
a rotating shaft protruding from an end in a longitudinal direction of the barrel to rotate the display housing; and
a free-stop hinge provided on an opposite end of the barrel to prevent an idle movement of the barrel immediately after the display housing is folded or unfolded,
wherein a pulley having a band ring is provided on the rotating shaft of the barrel, and a tension band is wound on the pulley of the rotating shaft of the barrel to provide tension for drawing the slider into the main housing while the display housing is folded.

2. The hinge apparatus according to claim 1, further comprising:
a torsion spring provided between a base plate and a rear portion of the slider, the torsion spring biasing the slider in an ejecting direction when the slider is in a fully ejected position and biasing the slider in a receiving direction when the slider is in a fully received position, the torsion spring being set in a neutral position where the torsion spring does not apply a force in any direction while the slider is moving.

3. The hinge apparatus according to claim 1, wherein the cycle attachment comprises:
guide pins hinged to the bonding assembly and protruding from both sides of the rear portion of the slider to control an orbit of the rear portion of the slider;
guideway grooves attached to left and right sides of the base plate, and each having a curved trajectory groove to guide the corresponding guide pin; and
a plurality of swing arms hinged to the bonding assembly to control the movement of the slider and an orbit of a front portion of the slider.

4. The hinge apparatus according to claim 1, further comprising:
a stabilizer hinged at a central portion thereof to the base plate of the bonding assembly and performing a radial rotation with respect to the hinged central portion, both ends of the stabilizer being bent twice at a right angle; and
links provided on the both ends of the stabilizer shaft, and having two articulations to be hinged to the guide pins of the rear portion of the slider, thus allowing left and right moving distances of the slider to be kept equal during the movement of the slider.

5. The hinge apparatus according to claim 1, wherein the free-stop hinge comprises the tension band wound between the spring and an S cam and A cam combination, and the pulley equipped with the ring for holding the tension band, thus preventing an idle movement of the display housing when being folded or unfolded.

6. The hinge apparatus according to claim 3, wherein the bonding assembly comprises:
a base plate secured to an inner wall of an upper portion of the main housing;
a bracket plate attached to a central portion of a lower surface of the base plate in such a way as to be in close contact therewith, thus causing the stabilizer and the torsion spring to be hinged; and
a plurality of guideway brackets fastened to both edges of the lower surface of the base plate, thus allowing the slider to be placed under the base plate and guiding the movement of the slider in conjunction with the folding of the display housing.

7. The hinge apparatus according to claim 3, wherein the torsion spring comprises:
a spring shaft coupled to prevent a coil portion from being deformed when a repulsive force is generated by a torsion moment;
an upper joint provided between a rotating shaft of the spring on the base plate and the spring shaft, the upper joint having on both ends thereof rotating-shaft holes; and
a lower joint provided between the spring shaft and a spring axle, the lower joint having on both ends thereof rotating-shaft holes.

8. The hinge apparatus according to claim 5, wherein the base plate comprises:
a follow projection projecting downwards from a lower surface of an end of a front portion thereof to define a rotating angle of the display housing; and
an arm bearing provided on an upper portion of a front portion of each of the guideway brackets attached to both ends of the base plate to render an end of the swing arm to be hinged.

9. The hinge apparatus according to claim 5, wherein the bracket plate comprises:
an arc-shaped bent end longitudinally formed on an end of a rear portion thereof to receive and hinge the stabilizer; and
a space defined between an end of the arc-shaped bent end and a spring hook protruding downwards from the base plate to render the torsion spring to be hinged.
